# EUROPEAN PATENT SPECIFICATION

(11) **EP 2 231 762 B1**
(45) Date of publication and mention of the grant of the patent: **15.06.2011**
(21) Application number: 08867737.2
(22) Date of filing: 23.12.2008
(51) Int. Cl.: C08K 5/098, C08K 5/1515, C08K 9/04, C08L 67/02

(54) **IONOMERIC POLYESTER COPOLYMER/ ORGANOCLAY NANOCOMPOSITES, METHOD OF MANUFACTURE, AND ARTICLES FORMED THEREFROM**
IONOMERE POLYESTERCOPOLYMER-/ORGANOTON-NANOKOMPOSITE, HERSTELLUNGSVERFAHREN DAFÜR UND DARAUS HERGESTELLTE ARTIKEL
NANOCOMPOSITES À BASE D'ARGILE ORGANIQUE/COPOLYMÈRE IONOMÈRE POLYESTER, PROCÉDÉ DE FABRICATION, ET ARTICLES FORMÉS À PARTIR DE CEUX-CI

(30) Priority: 28.12.2007 US 966070
(43) Date of publication of application: 29.09.2010
(73) Proprietor: SABIC Innovative Plastics IP B.V., 4612 PX Bergen op Zoom (NL)
(72) Inventor: KANNAN, Ganesh, Evansville Indiana 47712 (US); KARANAM, Sreepadaraj, NL-4611 JX Bergen Op Zoom (NL); MONTGOMERY, Steven James, Evansville Indiana 47712 (US); SHERMAN, Robert Lee Jr., Mason Ohio 45040 (US)
(74) Representative: Carpintero Lopez, Francisco
(86) International application number: PCT/US2008/088163
(87) International publication number: WO 2009/086375

(56) References cited:
- EP-A- 1 283 245
- WO-A-01/36528
- DATABASE WPI Week 200209 Thomson Scientific, London, GB; AN 2002-063856 XP002532927 -& JP 2001 150620 A (TEIJIN LTD) 5 June 2001 (2001-06-05)

## Description

### BACKGROUND OF THE INVENTION

This disclosure relates to nanocomposites comprising ionomeric polyester copolymers and organoclays, their methods of manufacture and articles formed therefrom.

Nanocomposites are class of composites that are particle-filled polymers for which at least one dimension of the dispersed phase is in the nanometer range (typically 10-250 nm). Polymer layered nanocomposites often have superior physical and mechanical properties over their microcomposite counterparts, including improved modulus, reduced gas permeability, improved flame retardance and improved scratch resistance. Moreover, the nanoscale dispersion of the filler does not give rise to the brittleness and opacity typical of composites.

Polymeric, intercalation-type nanocomposites have been the subject of extensive research over the past decade. Much of the work in this area has been focused on polymeric nanocomposites derived from layered silicates such as montmorillonite clay. When the silicate platelets are isotropically dispersed in a continuous polymer matrix, the material is termed "exfoliated." The best enhancements in physical properties can be achieved with an exfoliated morphology. Polymer nanocomposites comprising a semicrystalline polymer matrix are particularly attractive, due to the dramatic improvement in heat distortion temperature and modulus provided by the nanoparticle reinforcement and the high flow character inherent to most commodity semicrystalline thermoplastics such as nylon-6, nylon-6,6, poly(butylene terephthalate), poly(ethylene terephthalate), polypropylene, polyethylene, and the like. Because of these desirable characteristics, semicrystalline polymer nanocomposites have been shown to be well suited for application as injection moldable thermoplastics.

Sulfonated poly(butylene terephthalate) (PBT) random ionomers have been blended by reactive extrusion with organically modified montmorillonite. Because of the ionic nature of the sulfonate groups and their expected insolubility in the polyester matrix, the presence of the sulfonate groups provide a thermodynamic driving force for the production of nanocomposites derived from montmorillonite clays. Combining PBT-ionomers with montmorillonite, clays results in exfoliation of the clays due to favorable electrostatic interactions between the charged surfaces of the silicate clay particles and the -SO₃Na groups of the PBT-ionomer.

However, random ionomers with ionic content higher than 3 mol% have low crystallinity and hydrostability resulting in nanocomposites with inferior properties. It has also been established that the PBT ionomers hydrolyze faster than PBT due to the presence of polar -SO₃Na functional groups. The presence of the ionic groups leads to higher water absorption in PBT ionomer compared to regular PBT. In addition, the high polarity and ionic nature of the sodium sulfonate groups can increase the hydrolysis rate of ester groups. It has also been shown that certain organic clays also promote the hydrolysis of ester groups (H-Ion catalysis by clays; N.T. Coleman and Clayton McAuliffe, pp 282-289).

Hence an ongoing need exists to achieve exfoliation of clays with low ionic content ionomeric polyester copolymers and further improve the hydrostability of the corresponding nanocomposites without degrading the mechanical properties.

### BRIEF DESCRIPTION OF THE INVENTION

In one embodiment a composition comprises, based on the total weight of the composition, from 79 to 99.79 weight percent of a polyester ionomer component, wherein the polyester ionomer component comprises, based on the polyester ionomer component, 0 to 40 wt.% of a non-ionomeric polyester, and 60 to 100 wt.% of a ionomeric polyester copolymer comprising (i) non-ionomeric ester units and (ii) sulfonated ionomeric ester units, wherein the sulfonated ionomeric ester units are present in an amount from 0.05 to 5 mole percent of the total moles of ester units in the ionomeric polyester copolymer; from 0.1 to 6 weight percent of an organoclay; from 0.1 to 10 weight percent of an epoxy compound; and from 0.01 to 5 weight percent of a catalytic metal salt.

In another embodiment, a method of manufacture of the disclosed compositions comprises melt blending the components of the compositions.

In another embodiment, an article comprises the disclosed compositions.

The invention is further illustrated by the following detailed description and Examples.

### DETAILED DESCRIPTION

Disclosed herein are nanocomposite compositions comprising an organoclay and an ionomeric polyester copolymer that exhibit excellent hydrolytic stability, mechanical strength, for example flexural modulus and tensile elongation at break, and thermal properties. These properties are especially advantageous in automotive applications such as bumpers and body panels. The compositions and methods disclosed herein are further advantageous, as they can use polyesters formed from recycled poly(ethylene terephthalate) (PET).

The nanocomposite comprise, based on the total weight of the composition, from 79 to 99.79 weight percent of a polyester ionomer component, wherein the polyester ionomer component comprises, based on the polyester ionomer component, 0 to 40 wt.% of a non-ionomeric polyester, and 60 to 100 wt.% of a ionomeric polyester copolymer comprising (i) non-ionomeric ester units and (ii) sulfonated ionomeric ester units, wherein the sulfonated ionomeric ester units are present in an amount from 0.05 to 5 mole percent of the total moles of ester units in the ionomeric polyester copolymer; from 0.1 to 6 weight percent of an organoclay; from 0.1 to 6 weight percent of an epoxy compound; and from 0.01 to 5 weight percent of a catalytic metal salt.

This disclosure can be understood more readily by reference to the following detailed description of preferred embodiments of the invention and the examples included therein. In the following specification and claims, reference will be made to a number of terms which shall be defined to have the following meanings.

The singular forms "a", "an" and "the" include plural referents unless the context clearly dictates otherwise.

"Optional" or "optionally" means that the subsequently described event or circumstance can or cannot occur, and that the description includes instances where the event occurs and instances where it does not.

The term "integer" means a whole number that includes zero. For example, the expression "n is an integer from 0 to 4" means "n" can be any whole number from 0 to 4 including 0.

Dispersion" or "dispersed" refers to the distribution of the organoclay particles in the polymer matrix.

"Intercalated" or "intercalate" refers to a higher degree of interaction between the polymer matrix and the organoclay as compared to mere dispersion of the organoclay in the polymer matrix. When the polymer matrix is said to intercalate the organoclay, the organoclay exhibits an increase in the interlayer spacing between adjacent platelet surfaces as compared to the starting organoclay.

"Delamination" refers to the process of separation of ordered layers of clay platelets through the interaction of the organoclay with the polymer matrix.

"Exfoliate" or "exfoliated" means platelets dispersed mostly in an individual state throughout a polymer matrix material. "Exfoliated" as used herein denotes the highest degree of separation of platelet particles. "Exfoliation" refers to the process by which an exfoliate is formed from an intercalated or otherwise dispersed organoclay within a polymer matrix.

"Nanocomposite(s)", "nanocomposite composition(s)" and "composition(s)" refer to a polymer or copolymer having dispersed therein a plurality of individual clay platelets obtained from a layered clay material, wherein the individual particle sizes of the clay platelets are less than 100 nm. In one aspect, novel nanocomposite polymer compositions comprise (a) a polyester ionomer component comprising (i) an optional non-ionomeric polyester and (ii) an ionomeric polyester copolymer; (b) an epoxy compound for imparting hydrostability; (c) an organoclay, and (d) a catalytic metal salt. The ionomeric polyester copolymer comprises sulfonate groups and structural units derived from at least one organic dicarboxylic acid and at least one diol.

"Matrix polymer", "bulk polymer" or "bulk matrix polymer" refers to the continuous phase of a nanocomposite.

"Telechelic polymer" or "telechelic polyester" refers to a linear polyester having end groups functionalized with negatively charged functional group such as carboxylates, sulfonates, and the like. Telechelic polyesters are well known in the literature. Their synthesis and applications have been discussed in, e.g., Odian, G., Principles of Polymerization, 3rd edition, Wiley-Interscience, New York, 1991, p. 427.

"Ionomeric polyester copolymer" herein refers to a polyester comprising some repeating units functionalized with an ionic group such as carboxylates, sulfonates, and the like. The ionic groups can be present on the main chain, the end units, or both main chain and end units. Ionomeric polyester copolymers are inclusive of telechelic copolymers. They can also be linear or branched.

"End functionality" and "end-group functionality" are used interchangeably and refer to the functional group present on the ends of the polymer chain.

As used herein the term "aliphatic radical" refers to a radical having at least one carbon atom and a valence of at least one, and comprising a linear or branched array of atoms that is not cyclic. The array can include heteroatoms such as nitrogen, sulfur, silicon, selenium, and oxygen or can be composed exclusively of carbon and hydrogen. Aliphatic radicals can be "substituted" or "unsubstituted". A substituted aliphatic radical is an aliphatic radical that comprises at least one substituent. A substituted aliphatic radical can comprise as many substituents as there are positions available on the aliphatic radical for substitution. Substituents that can be present on an aliphatic radical include but are not limited to halogen atoms, such as fluorine, chlorine, bromine, and iodine. Substituted aliphatic radicals include trifluoromethyl, hexafluoroisopropylidene, chloromethyl, difluorovinylidene, trichloromethyl, bromoethyl, bromotrimethylene (-CH₂CHBrCH₂-), and the like. For convenience, the term "substituted aliphatic radical" is further defined herein to encompass, as part of the "linear or branched array of atoms which is not cyclic" comprising the substituted aliphatic radical, a wide range of functional groups. Examples of functional groups that can be present on a substituted aliphatic radical include allyl, aminocarbonyl (-CONH₂), carbonyl, dicyanoisopropylidene (-CH₂C(CN)₂CH₂-), formyl, hydroxymethyl (-CH₂OH), mercaptomethyl (-CH₂SH), methylthio (-SCH₃), methylthiomethyl (-CH₂SCH₃), methoxy, methoxycarbonyl, nitromethyl (-CH₂NO₂), thiocarbonyl, trimethylsilyl, t-butyldimethylsilyl, trimethyoxysilypropyl, vinyl, vinylidene, and the like. A C₁-C₁₀ aliphatic radical includes substituted aliphatic radicals and unsubstituted aliphatic radicals containing at least one but no more than 10 carbon atoms.

As used herein, the term "aromatic radical" refers to an array of atoms having at least two carbon atoms and a valence of at least one, and comprising at least one aromatic group. The array of atoms can include heteroatoms such as nitrogen, sulfur, selenium, silicon, and oxygen, or can be composed exclusively of carbon and hydrogen. As used herein, the term "aromatic radical" includes but is not limited to phenyl, pyridyl, furanyl, thienyl, naphthyl, phenylene, and biphenyl radicals. The aromatic group is invariably a cyclic structure having 4n+2 delocalized electrons where "n" is an integer equal to 1 or greater, as illustrated by phenyl groups (n=1), thienyl groups (n=1), furanyl groups (n=1), naphthyl groups (n=2), azulenyl groups (n=2), anthracenyl groups (n=3), and the like. The aromatic radical can also include nonaromatic components. For example, a benzyl group is an aromatic radical that comprises a phenyl ring (the aromatic group) and a methylene group (the nonaromatic component). Similarly a tetrahydronaphthyl radical is an aromatic radical comprising an aromatic group (C₆H₃) fused to a nonaromatic component (-(CH₂)₄-). Aromatic radicals can be "substituted" or "unsubstituted". A substituted aromatic radical is an aromatic radical that comprises at least one substituent. A substituted aromatic radical can comprise as many substituents as there are positions available on the aromatic radical for substitution. Substituents that can be present on an aromatic radical include, but are not limited to halogen atoms such as fluorine, chlorine, bromine, and iodine. Substituted aromatic radicals include trifluoromethylphenyl, hexafluoroisopropylidenebis(4-phenyloxy) (-OPhC(CF₃)₂PhO-), chloromethylphenyl, 3-trifluorovinyl-2-thienyl, 3-trichloromethylphenyl (3-CCl₃Ph-), bromopropylphenyl (BrCH₂CH₂CH₂Ph-), and the like. For convenience, the term "substituted aromatic radical" is further defined herein to encompass, as part of the "array of atoms having a valence of at least one comprising at least one aromatic group", a wide range of functional groups. Examples of substituted aromatic radicals include 4-allyloxyphenoxy, aminophenyl (H₂NPh-), aminocarbonylphenyl (NH₂COPh-), 4-benzoylphenyl, dicyanoisopropylidenebis(4-phenyloxy) (-OPhC(CN)₂PhO-), 3-methylphenyl, methylenebis(4-phenyloxy) (-OPhCH₂PhO-), ethylphenyl, phenylethenyl, 3-formyl-2-thienyl, 2-hexyl-5-furanyl, hexamethylene-1,6-bis(4-phenyloxy) (-OPh(CH₂)₆PhO-); 4-hydroxymethylphenyl (4-HOCH₂Ph-), 4-mercaptomethylphenyl (4-HSCH₂Ph-), 4-methylthiophenyl (4-CH3SPh-), methoxyphenyl, methoxycarbonylphenyloxy (e.g., methyl salicyl), nitromethylphenyl (-PhCH₂NO₂), trimethylsilylphenyl, t-butyldimethylsilylphenyl, vinylphenyl, vinylidenebis(phenyl), and the like. The term "a C₃-C₁₀ aromatic radical" includes substituted aromatic radicals and unsubstituted aromatic radicals containing at least three but no more than 10 carbon atoms. The aromatic radical 1-imidazolyl (C₃H₂N₂-) represents a C₃ aromatic radical. The benzyl radical (C₇H₈-) represents a C₇ aromatic radical.

As used herein the term "cycloaliphatic radical" refers to a radical having a valence of at least one, and comprising an array of atoms that is cyclic but not aromatic. A "cycloaliphatic radical" further does not contain an aromatic group. A "cycloaliphatic radical" can comprise one or more noncyclic components. For example, a cyclohexylmethyl group (C₆H₁₁CH₂-) is a cycloaliphatic radical that comprises a cyclohexyl ring (the array of atoms that is cyclic but not aromatic) and a methylene group (the noncyclic component). The cycloaliphatic radical can include heteroatoms such as nitrogen, sulfur, selenium, silicon, and oxygen, or can be composed exclusively of carbon and hydrogen. Cycloaliphatic radicals can be "substituted" or "unsubstituted". A substituted cycloaliphatic radical is defined as a cycloaliphatic radical that comprises at least one substituent. A substituted cycloaliphatic radical can comprise as many substituents as there are positions available on the cycloaliphatic radical for substitution. Substituents that can be present on a cycloaliphatic radical include, but are not limited to, halogen atoms such as fluorine, chlorine, bromine, and iodine. Substituted cycloaliphatic radicals include trifluoromethylcyclohexyl, hexafluoroisopropylidenebis(4-cyclohexyloxy) (-OC₆H₁₁C(CF₃)₂C₆H₁₁O-), chloromethylcyclohexyl, 3-trifluorovinyl-2-cyclopropyl, 3-trichloromethylcyclohexyl (3-CCl₃C₆H₁₁-), bromopropylcyclohexyl (BrCH₂CH₂CH₂C₆H₁₁-), and the like. The term "substituted cycloaliphatic radical" is further defined herein to encompass a wide range of functional groups. Examples of substituted cycloaliphatic radicals include 4-allyloxycyclohexyl, aminocyclohexyl (H₂NC₆H₁₁-), aminocarbonylcyclopentyl (NH₂COC₅H₉-), 4-acetyloxycyclohexyl, dicyanoisopropylidenebis(4-cyclohexyloxy) (OC₆H₁₁C(CN)₂C₆H₁₁O-), methylenebis(4-cyclohexyloxy) (-OC₆H₁₁CH₂C₆H₁₁O-), cyclopropylethenyl, 3-formyl-2-tetrahydrofuranyl, 2-hexyl-5-tetrahydrofuranyl, hexamethylene-1,6-bis(4-cyclohexyloxy) (-OC₆H₁₁(CH₂)C₆H₁₁O-), 4-hydroxymethylcyclohexyl (4-HOCH₂C₆H₁₁-), 4-mercaptomethylcyclohexyl (4-HSCH₂C₆H₁₁-), 4-methylthiocyclohexyl (4-CH₃SC₆H₁₁-), 4-methoxycyclohexyl, 2-methoxycarbonylcyclohexyloxy (2-CH₃OCOC₆H₁₁O-), nitromethylcyclohexyl (NO₂CH₂C₆H₁₀-), trimethylsilylcyclohexyl, t-butyldimethylsilylcyclopentyl, 4-trimethoxysilylethylcyclohexyl ((CH₃O)₃SiCH₂CH₂C₆H₁₀-), vinylcyclohexenyl, vinylidenebis(cyclohexyl), and the like. The term "a C₃-C₁₀cycloaliphatic radical" includes substituted cycloaliphatic radicals and unsubstituted cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

Generally, useful clay materials are layered materials that are an agglomeration of individual platelet particles that are closely stacked together in domains called tactoids. The individual platelet particles of the clays have a thickness of less than 2 nm and diameter from 10 to 3000 nm. The clay material can be selected from the group consisting of natural, synthetic, and modified phyllosilicates. Natural clays include smectite clays such as montmorillonite, saponite, hectorite, mica, vermiculite, bentonite, nontronite, beidellite, volkonskoite, saponite, magadite, kenyaite, and the like. Synthetic clays include synthetic mica, synthetic saponite, synthetic hectorite, and the like. Modified clays include fluorinated montmorillonite, fluorinated mica, and the like. Suitable clays are available from various commercial sources such as Nanocor, Inc., Laviosa Chimica Mineraria, Southern Clay Products, Kunimine Industries, Ltd., and Elementis Specialties, Inc. In one embodiment, the nanocomposite comprises an organoclay comprising an inorganic clay selected from the group consisting of montmorillonite, saponite, hectorite, vermiculite, bentonite, nontronite, beidellite, volkonskoite, saponite, magadite, kenyaite, synthetic saponite, synthetic hectorite, fluorinated montmorillonite, and combinations thereof. Specific clay materials are smectite clays, particularly bentonite or montmorillonite.

The clay materials can comprise refined but unmodified clays, modified clays, or mixtures of modified and unmodified clays. In an embodiment, the selected clay is treated to facilitate separation of the agglomerates of platelet particles to individual platelet particles to form smaller-sized tactoids. Separating the platelet particles prior to incorporation into the polymer also improves the polymer/platelet interface. Any treatment that achieves the above goals can be used. Many clay treatments used to modify the clay for the purpose of improving dispersion of clay materials are known and can be used. The clay treatment can be conducted prior to, or during mixing the clay material with the polymer.

In an embodiment, a modified or treated layered clay material is prepared by the reaction of a swellable layered clay with an organic cation (to effect partial or complete cation exchange). If desired, two or more organic cations can be used to treat the clay. The process to prepare the organoclays (modified or treated clays) can be conducted in a batch, semi-batch, or continuous manner.

Organic cations used to modify a clay material or a mixture of clay materials are derived from organic cation salts, such as polyalkylammonium salts, polyalkylaminopyridinium salts, polyalkylguanidinium salts, polyalkylimidazolium salts, polyalkylbenzimidazolium, phosphonium salts, sulfonium salts, or a combination comprising at least one of the foregoing salts.. "Polyalkyl" refers to a central atom substituted by alkyl groups, but can contain hydrogens to fulfill the valence of the central atom as well. A combination of alkyl groups and aromatic groups can be used. Specific alkyl groups can each have from 1 to 12 carbon atoms, and specific aromatic groups can have from 6 to 12 carbon atoms. Examples of polyalkylammonium salts include tetramethylammonium, hexylammonium, butylammonium, bis(2-hydroxyethyl)dimethylammonium, hexylbenzyldimethylammonium, benzyltrimethyl ammonium, butyl benzyl dimethyl ammonium, tetrabutyl ammonium, di(2-hydroxyethyl) ammonium, dodecyl ammonium, octadecyl trimethyl ammonium, bis(2-hydroxyethyl) octadecyl methyl ammonium, octadecyl benzyl dimethyl ammonium and the like; examples of polyalkylaminopyridinium salts include p-dimethylamino N-methyl pyridinium salts, o-dimethylaminopyridinium salts, N-alkyl pyridinium salts and the like; polyalkylguanidinium salts such as hexaalkyl guanidinium salts; imidazolium salts such as 1,2-dimethyl-3-N-hexadecylimidazolium salt, benzimidazolium salts, and the like; and phosphonium ions such as tetrabutyl phosphonium, trioctyl octadecyl phosphonium, tetraoctyl phosphonium, octadecyl triphenyl phosphonium, and the like or mixtures thereof.

Illustrative examples of suitable polyalkoxylated ammonium compounds include the hydrochloride salts of polyalkoxylated amines such as JEFFAMINE™ (of Huntsman Chemical), namely, JEFFAMINE™-506 and JEFFAMINE™ 505, and an amine available under the trade name ETHOMEEN™ (of Akzo Chemise America), namely, ETHOMEEN™ 18/25, which is octadecyl bis(polyoxyethylene[15])amine, wherein the numbers in brackets refer to the total number of ethylene oxide units. A further illustrative example of a suitable polyalkoxylated ammonium compound is ETHOQUAD™ 18/25 (of Akzo Chemie America), which is octadecyl methyl bis(polyoxyethylene[15]) ammonium chloride, wherein the numbers in brackets refer to the total number of ethylene oxide units. A preferred modified clay that is used in this invention is the montmorillonite modified with a quaternary ammonium salt bearing two dihydrogenated tallow and two dimethyl groups; and is commercially available as DELLITE® 72T from Laviosa Chemicals, Italy or available as CLAYTONE™ HY from Southern Clay Products, Inc., Gonzales, Tex.

The polyester ionomer component used in the nanocomposite compositions comprises an ionotneric polyester copolymer and an optional non-ionotneric polyester. Ionotneric polyester copolymers, including telechelic polyester copolymers used to prepare the nanocomposite compositions comprise non-ionomer polyester structural units and ionomeric polyester structural units. The ionomeric polyester structural units contain an ionic group, in particular a sulfonate group. The ionomeric polyester copolymers comprise from 0.05 to 5 mole percent of sulfonate groups, based on the total moles of repeating ester units in the ionomeric polyester copolymer. More specifically, the ionomeric polyester copolymer comprises from 0.1 to 5, specifically 0.1 to 3 mole percent of sulfonate end groups, based on the total moles of repeating units in the ionomeric polyester copolymer.

The non-ionomeric and ionomeric polyester units are derived from at least one dicarboxylic acid and at least one diol unit. Typical dicarboxylic acids are selected from the group consisting of terephthalic acid, isophthalic acid, naphthalenedicarboxylic acid, 1,4-cyclohexanedicarboxylic acid. The various isomers of naphthalenedicarboxylic acid such as 1,4-, 2,6-and the like can be used. The 1,4-cyclohexanedicarboxylic acid can be in the cis form, trans form or cis/trans mixture. In a preferred embodiment of the present invention, the dicarboxylic acid of choice is chosen from terephthalic acid and 1,4-cyclohexanedicarboxylic acid.

The dicarboxylic acid component of the polyester can optionally be modified with up to 50 mole percent of one or more different dicarboxylic acids. Such additional dicarboxylic acids include but are not limited to succinic acid, glutaric acid, adipic acid, azelaic acid, diphenyl-4,4'-dicarboxylic acid, phenylenedi(oxyacetic acid), and mixtures thereof.

Diols that can be used to prepare the iononteric polyester copolymer are selected from the group consisting of ethylene glycol, 1,3-propanediol, 1,4-butanediol, 1,6-hexanediol, 1,4-cyclohexanedimethanol, diethylene glycol, and mixtures thereof. The diol component can optionally be modified with up to 50 mole percent of one or more different diols that are selected from the group consisting of triethylene glycol, 1,5-pentanediol, bis(4-hydroxycyclohexyl)-propane, 1,4-di-(2-hydroxyethoxy)-benzene, 2,2,4-trimethylpentane diol, 2,2-bis-(4-hydroxypropoxyphenyl)-propane, and mixtures thereof. In a preferred embodiment of the present invention, the diol is 1,4-butanediol.

The ionomeric polyester copolymer can be a random ionomeric polyester copolymer wherein the ionic groups are randomly distributed along the main chain. Random ionomeric polyester copolymers comprise some monovalent and/or divalent sulfonate salt units represented by the formula IA or IB.

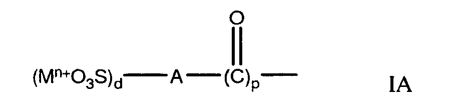

(Mⁿ⁺O₃S)_{d}-A-(OR"O)ₚ IB

where p=1-3, d=1-3, p+d=2-6, M is a metal of charge n+ where n is an integer greater than 0, and A is an aryl group containing one or more aromatic rings where the sulfonate substituent is directly attached to an aryl ring, R" is a divalent alkyl group and the metal sulfonate group is bound to the polyester through ester linkages.

Exemplary aryl groups containing one or more aromatic rings include benzene, naphthalene, anthracene, biphenyl, terphenyl, oxy diphenyl, sulfonyl diphenyl or alkyl diphenyl. The aryl groups can contain one or more sulfonate substituents; d=1-3 and may have one or more carboxylic acid linkages; p=1-3. Groups with one sulfonate substituent (d=1) and two carboxylic linkages (p=2) are preferred. R" is an alkyl group, for example, -CH₂CH₂-; -CH₂CH₂OCH₂CH₂-, -CH(CH₃)CH₂-, CH₂CH₂CH₂-, and - CH₂CH₂CH₂CH₂-. M is a metal counterion, wherein n=1-5. Exemplary counterions include alkaline or alkaline earth metals where n=1-2, particularly sodium, lithium, potassium, zinc, tin, aluminum, copper, manganese, nickel, cobalt, iron, chromium, and other transition metal cations. In particular, the metal counterion is sodium ion. In addition, ammonium salts represented by the general formula NHₓR_{y}⁺ (wherein R is typically an alkyl group and the sum of x and y is 4) can also be used. In one embodiment the ionomeric polyester copolymer is poly(butylene terephthalate) comprising structural units with at least zero. 05 mole % sodium sulfonate salt groups based on the total number of polymer repeat units.

Typical sulfonate substituents that can be incorporated into the metal sulfonate polyester copolymer can be derived from the following carboxylic acids or their ester forming derivatives: sodium sulfo isophthalic acid, potassium sulfo terephthalic acid, sodium sulfo naphthalene dicarboxylic acid, calcium sulfo isophthalate, potassium 4,4'-di(carbomethoxy) biphenyl sulfonate, lithium 3,5-di(carbomethoxy)benzene sulfonate, sodium p-carbomethoxy benzene sulfonate, dipotassium 5-carbomethoxy-1,3-disulfonate, sodio 4-sulfo naphthalene-2,7-dicarboxylic acid, 4-lithio sulfophenyl-3,5-dicarboxy benzene sulfonate, 6-sodiosulfo-2-naphthyl-3,5-dicarbomethoxy benzene sulfonate and dimethyl 5-[4-(sodiosulfo) phenoxy] isophthalate. Other sulfonate carboxylic acids and their ester forming derivatives are described in U.S. Pat. Nos. 3,018,272 and 3,546,008, which are included herein by reference. In one embodiment the sulfonate polyester is derived from dimethyl-5-sodiosulfo-1,3-phenylenedicarboxylate.

In one embodiment a random ionomeric polyester copolymer comprises divalent ionomer units represented by the formula II: 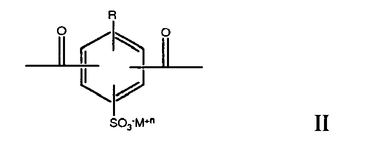 where R is hydrogen, halogen, alkyl or aryl; M is a metal, and n is 1-5.

In one embodiment the random ionomeric polyester copolymer has the formula III: 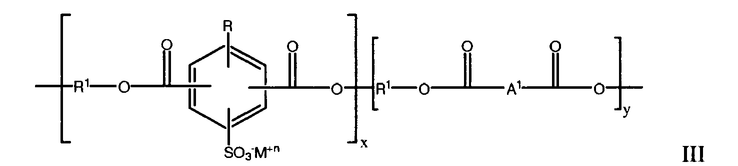 where the ionomer units, x, are from 0.05-5 mole percent of the polymer, particularly 0.1 to 5 mole percent. X+y is equal to 100 mole percent. Most particularly R is hydrogen. When R is hydrogen, A¹ is phenylene, and R¹ is an alkylene radical of from C¹-C¹², specifically from C² or C⁴ , and x and y are in mole percent, then x is from 0.5 to 20 percent, and more specifically from 0.5 to 10 percent. In one embodiment the ionomeric polyester copolymer has the following formula IV: 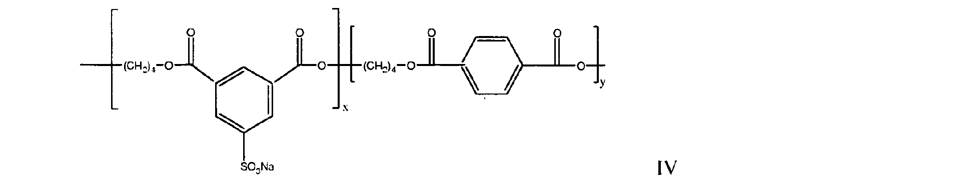 where x and y are randomly distributed along the polymer backbone.

Typical glycol or diol reactants, R¹, include straight chain, branched, or cycloaliphatic alkane diols and may contain from 2 to 12 carbon atoms. Examples of such diols include but are not limited to ethylene glycol; propylene glycol, i.e., 1, 2-and 1,3-propylene glycol; butane diol, i.e., 1,3-and 1,4-butane diol; diethylene glycol; 2,2-dimethyl-1,3-propane diol; 2-ethyl, 2-methyl, 1,3-propane diol; 1,3-and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis-and trans-isomers; triethylene glycol; 1,10-decane diol; and mixtures of any of the foregoing. In one embodiment the cycloaliphatic diol is 1,4-cyclohexane dimethanol or its chemical equivalent. When cycloaliphatic diols are used as the diol component, a mixture of cis-to trans-isomers can be used. In one embodiment the trans isomer content is 70% or more. Chemical equivalents to the diols include esters, such as dialkyl esters, diaryl esters and the like.

Examples of aromatic dicarboxylic acid reactants, as represented by the dicarboxylated residue A¹ are isophthalic or terephthalic acid, 1,2-di(p-carboxyphenyl) ethane, 4,4'-dicarboxydiphenyl ether, 4, 4'bisbenzoic acid and mixtures thereof. All of these acids contain at least one aromatic nucleus. Acids containing fused rings can also be present, such as in 1,4-1,5-or 2,6-naphthalene dicarboxylic acids. In one embodiment the dicarboxylic acids are terephthalic acid, isophthalic acid or mixtures thereof.

In one embodiment the ionomeric polyester copolymers are poly(ethylene terephthalate) (PET) ionomers, poly(1,4-butylene terephthalate) (PBT) ionomers, (polypropylene terephthalate) (PPT) ionomers, or a combination comprising one or more of the foregoing ionomers.

Also contemplated herein are the above polyester ionomers with minor amounts, e.g., from 0.5 to 15 percent by weight, of units derived from aliphatic acid and/or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

In one embodiment the poly(1,4-butylene terephthalate) ionomer is obtained by polymerizing an ionomer component comprising a dimethyl 5-sodiosulfo-1,3-phenylenedicarboxylate, from 0.05 to 5 mole %, a glycol component of at least 70 mole %, particularly at least 90 mole %, of tetramethylene glycol and an acid component of at least 70 mole %, particularly at least 90 mole %, of terephthalic acid, and polyester-forming derivatives therefore.

The glycol component can contain not more than 30 mole %, specifically not more than 20 mole %, of another glycol, such as ethylene glycol, trimethylene glycol, 2-methyl-1,3-propane glycol, hexamethylene glycol, decamethylene glycol, cyclohexane dimethanol, or neopentylene glycol.

The acid component can contain not more than 30 mole %, specifically not more than 20 mole %, of another acid such as isophthalic acid, 2,6-naphthalene dicarboxylic acid, 1,5-naphthalene dicarboxylic acid, 4,4'-diphenyldicarboxylic acid, 4,4'-diphenoxyethane dicarboxylic acid, p-hydroxy benzoic acid, sebacic acid, adipic acid and polyester-forming derivatives thereof.

It is also possible to use a branched ionomeric polyester copolymer in which a branching agent, for example, a glycol having three or more hydroxyl groups is used to produce a branched polymer.

The ionomeric polyester copolymers can be made by methods well-known to those skilled in the art, for example by polymerization of suitable polyester monomers with inclusion of an ionomer-containing monomer or a masked ionomer-containing monomer convertible to an ionomeric species following synthesis of the polyester. Particularly suitable ionomer-containing monomers are sulfonated phthalate esters such as dimethyl-5-sulfoisophthalate sodium salt. Alternatively, the ionic groups can be introduced into a polyester in a post-synthesis process such as electrophilic substitution on an aromatic ring, particularly sulfonation.

As previously mentioned, the ionomeric polyester copolymer can also be a telechelic polymer. Telechelic polymers possess end functionalities that typically comprise sulfonate groups, carboxylate groups, alcohol groups and mixtures thereof. The end functionalities can arise as a result of the polymerization reaction or can be introduced through the use of a separate reactant.

In a specific embodiment, the telechelic polyester comprises from 0.05 to 5 mole percent of sulfonate end groups, based on the total moles of repeating units in the telechelic polyester. More specifically, the telechelic polyester comprises from 0.1 to 5, specifically 0.1 to 3 mole percent of sulfonate end groups, based on the total moles of repeating units in the telechelic polyester.

The telechelic polyester can be synthesized by the polymerization of the dicarboxylic acid with substantially equimolar amounts of diol, followed by end-capping with a suitable end-capping agent. A typical end-capping agent can be a compound containing sulfonate group with a monocarboxylic acid or a primary monoalcohol. An example of this compound is a sulfoaromatic carboxylic acid of the formula: 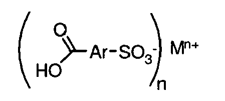 where Ar a C₃-C₁₂ aromatic group that is unsubstituted or substituted with a C₁-C₃ aliphatic group; M is an alkali metal, alkaline earth metal, or transition metal; and n is one or two. In one embodiment, Ar is a C6 aromatic group substituted with a C₁-C₃ aliphatic group. In another embodiment, Ar is a phenylene group. A preferred end-capping agent is 3-carboxy benzenesulfonic acid, sodium salt (CAS # 17625-03-5) that is available commercially from Aldrich Chemical Co. Another end-capping agent is the reaction product of an alkane diol with an alkane sulfone, which has the formula: 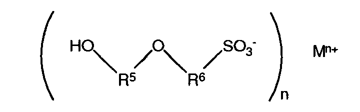 where R⁵ and R⁶ are independently at each occurrence a C₁-C₁₂ aliphatic radical, a C₃-C₁₂ cycloaliphatic radical, or a C₃-C₁₂ aromatic radical; M is an alkali metal, alkaline earth metal, or transition metal; and n is 1 or 2. In one embodiment, R⁵ and R⁶ are independently at each occurrence a C₁-C₁₂ aliphatic radical.

In an alternative embodiment, the diol is reacted first with the sulfoaromatic carboxylic acid metal salt or the alkane sulfone in an inert solvent or as a neat reaction to give rise to a monofunctional sulfonate product. The product from the reaction in the first step is allowed to react with diol and dicarboxylate ester in the same reaction vessel in an inert solvent or as a neat reaction to obtain polyester that is end-capped with sulfonate groups. Optional transesterification catalysts and cocatalysts can be added to the reaction mixture to improve the kinetics of the both the reactions. Typical reaction temperatures for both the reactions are greater than 150°C. Polymers are purified by dissolution in a suitable solvent such as methylene chloride and precipitation into a non-solvent such as methanol, filtration, isolation, repeating the steps involved in the purification process multiple times, and vacuum drying the resulting telechelic polyester. Other purification methods known to those skilled in the art can be used to obtain pure telechelic polyesters. Typically, the polymers are not purified, but are used directly as obtained from the melt reactor.

Polymers synthesized using the methods described provide almost 90 mole percent incorporation of the sulfonate groups into the polymer chain as an end group, with respect to the total amount of sulfonate groups in the initial reactant feed. Also, the polymers consist of at least 50 mole percent of sulfonate end groups, with respect to the total end groups present.

In one embodiment, the telechelic polyalkylene ester is a poly(ethylene terephthalate), a poly(butylene terephthalate), a poly(trimethylene terephthalate), or a combination thereof. Specifically, the ionomeric telechelic polyalkylene ester is a poly(butylene terephthalate). In another embodiment the ionomeric telechelic poly(butylene terephthalate) is derived from a recycled poly(ethylene terephthalate). In still another embodiment, the nanocomposite comprises ionomeric telechelic poly(butylene terephthalate) and a polyester other than ionomeric telechelic poly(butylene terephthalate).

The nanocomposites further optionally comprise a non-ionomeric polyester (or simply "polyester"). The non-ionomeric polyester can be a thermoplastic polyester, or a thermoplastic elastomeric polyester, or a liquid crystalline polyester, for example of the types described above which could serve as the basis for the ionomeric polyester copolymer. When non-ionomeric polyester is present, it can comprise either the same type or a different type of polyester units as the ionomeric polyester copolymer. For example, non-ionomeric polyesters can comprise a thermoplastic poly(alkylene arenedicarboxylate) while the ionomeric polyester copolymer can comprise an ionomeric elastomeric polyalkylene terephthalate containing soft-block segments of poly(alkylene glycol). In another illustrative example a non-ionomeric polyester can comprise a liquid crystalline polyester while the ionomeric polyester copolymer can comprise an ionomeric thermoplastic polyalkylene terephthalate. When a non-ionomeric polyester is present which comprises a different polyester than the ionomeric polyester copolymer, then the two polyesters are specifically at least partially miscible or compatible. Alternatively, if the two polyesters are incompatible, they can be chemically or physically compatibilized by known methods.

In one embodiment the ionomeric polyester copolymer and the non-ionomeric polyester each comprise the same type of polyester units, and are at least partially miscible or compatible with each other. Within the present context "same type of polyester units" means that each polyester is composed of essentially the same monomer units except that one of the polyesters is a copolymer with non-ionomeric units and ionomeric units, in particular units that contain sulfonate groups. When the ionomeric polyester copolymer and non-ionomeric polyester each comprise the same type of polyester units but are incompatible with one another, then they can be chemically or physically compatibilized by known methods. In one embodiment the non-ionomeric polyester is a polyalkylene ester, specifically a poly(butylene) terephthalate. In one embodiment, the ionomeric polyester copolymer is a polyalkylene ester, specifically a poly(ethylene) terephthalate, a poly(butylene) terephthalate, a poly(trimethylene) terephthalate, or a combination thereof. In one embodiment both the ionomeric polyester copolymer and non-ionomeric polyester are a poly(alkylene arenedicarboxylate), more particularly a poly(ethylene terephthalate), and even more particularly a poly(butylene terephthalate). Most particularly the nanocomposite comprises an ionomeric poly(butylene terephthalate) and a non-ionomeric poly(butylene terephthalate) compatible with the ionomeric poly(butylene terephthalate). In one embodiment the ionomeric polyalkylene ester is a telechelic poly(butylene terephthalate) derived from a recycled poly(ethylene terephthalate).

The relative amounts of the non-ionomeric polyester and the ionomeric polyester copolymer in the ionomeric polyester component will vary depending on the desired properties of the compositions. In one embodiment, the ionomeric polyester component comprises from 0 to 90 wt.%, specifically 1 to 80 wt.%, more specifically 10 to 70 wt.%, even more specifically 20 to 80 wt.% of the non-ionomeric polyester; and 10 to 100 wt.%, specifically 20 to 99 wt.%, more specifically 30 to 90 wt.%, even more specifically 20 to 80 wt.% of the ionomeric polyester copolymer. The ionomeric polyester component can alternatively comprise from 30 to 40 wt.% of the non-ionomeric polyester and from 60 to 70 wt.% of the ionomeric polyester copolymer.

The nanocomposite composition also comprises an epoxy-containing material for improving the stability of the compositions, in particular multi-functional epoxy-containing compounds. The term "polyfunctional" or "multifunctional" in connection with the epoxy-functional material means that at least two epoxy groups are present in each molecule of the material. The polyfunctional epoxy material can contain aromatic and/or aliphatic residues. Examples include epoxy novolac resins, epoxidized vegetable (e.g., soybean, linseed) oils, tetraphenylethylene epoxide, styrene-acrylic copolymers containing pendant glycidyl groups, glycidyl methacrylate-containing polymers and copolymers, and difunctional epoxy compounds such as 3,4-epoxycyclohexylmethyl-3,4-epoxycyclohexanecarboxylate.

In one embodiment, the polyfunctional epoxy-functional material is an epoxy-functional polymer, which as used herein include oligomers. Exemplary polymers having multiple epoxy groups include the reaction products of one or more ethylenically unsaturated compounds (e.g., styrene, ethylene and the like) with an epoxy-containing ethylenically unsaturated monomer (e.g., a glycidyl C₁₋₄ (alkyl)acrylate, allyl glycidyl ethacrylate, and glycidyl itoconate).

For example, in one embodiment the polyfunctional epoxy-functional material is a styrene-acrylic copolymer (including an oligomer) containing glycidyl groups incorporated as side chains. Several useful examples are described in the International Patent Application WO 03/066704 A1, assigned to Johnson Polymer, LLC, which is incorporated herein by reference in its entirety. These materials are based on copolymers with styrene and acrylate building blocks that have glycidyl groups incorporated as side chains. A high number of epoxy groups per polymer chain is desired, at least 10, for example, or greater than 15, or greater than 20. These polymeric materials generally have a molecular weight greater than 3000, specifically greater than 4000, and more specifically greater than 6000. These are commercially available from BASF under the Joncryl® trade name, specifically the Joncryl® ADR 4368 material.

Another example of an epoxy-functional copolymer is the reaction product of an epoxy-functional C₁₋₄(alkyl)acrylic monomer with a non-functional styrenic and/or C₁₋₄(alkyl)acrylate and/or olefin monomer. In one embodiment the epoxy polymer is the reaction product of an epoxy-functional (meth)acrylic monomer and a non-functional styrenic and/or (meth)acrylate monomer. These carboxy reactive materials are characterized by relatively low molecular weights. In another embodiment, the carboxy reactive material is an epoxy-functional styrene (meth)acrylic copolymer produced from an epoxy functional (meth)acrylic monomer and styrene. As used herein, the term "(meth)acrylic" includes both acrylic and methacrylic monomers, and the term "(meth)acrylate includes both acrylate and methacrylate monomers. Examples of specific epoxy-functional (meth)acrylic monomers include, but are not limited to, those containing 1,2-epoxy groups such as glycidyl acrylate and glycidyl methacrylate.

Suitable C₁₋₄(alkyl)acrylate comonomers include, but are not limited to, acrylate and methacrylate monomers such as methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, ethyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. Combinations comprising at least one of the foregoing comonomers can be used.

Suitable styrenic monomers include, but are not limited to, styrene, alpha-methyl styrene, vinyl toluene, p-methyl styrene, t-butyl styrene, o-chlorostyrene, and mixtures comprising at least one of the foregoing. In certain embodiments the styrenic monomer is styrene and/or alpha-methyl styrene.

In another embodiment, the epoxy-functional material is an epoxy compound having two terminal epoxy functionalities, and optionally additional epoxy (or other) functionalities. The compound can further contain only carbon, hydrogen, and oxygen. Difunctional epoxy compounds, in particular those containing only carbon, hydrogen, and oxygen can have a molecular weight of below 1000 g/mol, to facilitate blending with the ionomeric polyester component. In one embodiment the difunctional epoxy compounds have at least one of the epoxide groups on a cyclohexane ring. Exemplary difunctional epoxy compounds include, but are not limited to, 3,4-epoxycyclohexyl-3,4-epoxycyclohexyl carboxylate, bis(3,4-epoxycyclohexylmethyl) adipate, vinylcyclohexene di-epoxide, bisphenol diglycidyl ethers such as bisphenol-A diglycidyl ether, tetrabromobisphenol-A diglycidyl ether, glycidol, diglycidyl adducts of amines and amides, diglycidyl adducts of carboxylic acids such as the diglycidyl ester of phthalic acid the diglycidyl ester of hexahydrophthalic acid, and bis(3,4-epoxy-6-methylcyclohexylmethyl) adipate, butadiene diepoxide, vinylcyclohexene diepoxide, dicyclopentadiene diepoxide, and the like. Especially preferred is 3,4-epoxycyclohexyl-3,4 epoxycyclohexylcarboxylate.

The difunctional epoxide compounds can be made by techniques well known to those skilled in the art. For example, the corresponding α- or β-dihydroxy compounds can be dehydrated to produce the epoxide groups, or the corresponding unsaturated compounds can be epoxidized by treatment with a peracid, such as peracetic acid, in well-known techniques. The compounds are also commercially available.

Other materials with multiple epoxy groups are acrylic and/or polyolefin copolymers and oligomers containing glycidyl groups incorporated as side chains. Suitable epoxy-functional materials are available from Dow Chemical Company under the tradename D.E.R.332, D.E.R.661, and D.E.R.667; from Resolution Performance Products under the trade name EPON Resin 1001F, 1004F, 1005F, 1007F, and 1009F; from Shell Oil Corporation under the trade names EPON 826, 828, and 871; from Ciba-Giegy Corporation under the trade names CY-182 and CY-183; and from Dow Chemical Co. under the tradename ERL-4221 and ERL-4299. As set forth in the Examples, BASF is a supplier of an epoxy functionalized material known as ADR4368 and 4300. A further example of a polyfunctional carboxy-reactive material is a co- or terpolymer including units of ethylene and glycidyl methacrylate (GMA), sold by Arkema under the trade name LOTADER^{®}.

The amount of epoxy-functional compound in the nanocomposite composition is 0.1 to 10 percent by weight, more particularly 0.5 to 4.0 percent by weight, and most particularly 1.0 to 4.0 percent by weight, most specifically 1.0 to 3.0 percent by weight. In one embodiment the amount of the epoxy compound is 10 to 320 milliequivalents epoxy group per 1.0 kg of the polyester composition.

The nanocomposite composition also comprises a catalytic metal salt ("catalyst") and an optional co-catalyst. The catalyst and optional co-catalyst are used to catalyze the reaction between the epoxy compound and the polyester composition. The catalyst can be a hydroxide, hydride, amide, carbonate, borate, phosphate, C₂₋₃₆ carboxylate, C₁₋₁₈ enolate, or a C₂₋₃₆ dicarboxylate of an alkali metal such as sodium, potassium, lithium, or cesium, of an alkaline earth metal such as calcium, magnesium, or barium, or other metal such as zinc or a lanthanum metal; a Lewis catalyst such as a tin or titanium compound; a nitrogen-containing compound such as an amine halide or a quaternary ammonium halide (e.g., dodecyltrimethylammonium bromide), or other ammonium salt, including a C₁₋₃₆ tetraalkyl ammonium hydroxide or acetate; a C₁₋₃₆ tetraalkyl phosphonium hydroxide or acetate; or an alkali or alkaline earth metal salt of a negatively charged polymer. Mixtures comprising at least one of the foregoing catalysts can be used, for example a combination of a Lewis acid catalyst and one of the other foregoing catalysts.

Specific exemplary catalysts include but are not limited to alkaline earth metal oxides such as magnesium oxide, calcium oxide, barium oxide, and zinc oxide, tetrabutyl phosphonium acetate, sodium carbonate, sodium bicarbonate, sodium tetraphenyl borate, dibutyl tin oxide, antimony trioxide, sodium acetate, calcium acetate, zinc acetate, magnesium acetate, manganese acetate, lanthanum acetate, sodium benzoate, sodium stearate, sodium benzoate, sodium caproate, potassium oleate, zinc stearate, calcium stearate, magnesium stearate, lanthanum acetylacetonate, sodium polystyrenesulfonate, titanium isopropoxide, and tetraammonium hydrogensulfate. Mixtures comprising at least one of the foregoing catalysts can be used.

The catalytic metal salt can be present in the composition in any effective amount. Specifically the catalyst is present in an amount ranging from 0.01 to 5 weight percent, specifically from 0.03 to 0.5 weight percent, more specifically 0.01 or 0.1 to 1 weight percent, still more specifically from 0.2 to 0.5 weight percent, based on the total weight of the nanocomposite composition.

The nanocomposite compositions can be prepared by methods known to those skilled in the art. In one embodiment, the compositions are prepared by melt blending the non-ionomeric polyester, ionomeric polyalkylene ester, organoclay, epoxy compound, and catalytic metal salt in a suitable mixing instrument capable of heating to melt temperatures of the polymers. In one embodiment, the mixing is done in a Brabender mixer in a temperature range from 180°C to 300°C, more specifically from 225°C to 275°C and most specifically from 240°C to 270°C. In one embodiment, the melt blending is carried out in an extruder. A typical nanocomposite composition contains modified clay in the range of from 0.1 weight percent to less than 7 weight percent of the nanocomposite composition. Specifically, the modified clay is present in an amount from 0.5 weight percent to 6 weight percent, and more specifically, 2 weight percent to 5 weight percent, based on total weight of the nanocomposite composition.

In a more specific embodiment, the nanocomposite composition comprises, based on the total weight of the composition, from 83.5 to 98.3 weight percent, specifically 94 to 98 weight percent, of a polyester ionomer component, wherein the polyester ionomer component comprises, based on the polyester ionomer component, 30 to 40 wt.% of a non-ionomeric polyester, and 60 to 70 wt.% of a ionomeric polyester copolymer comprising non-ionomeric and ionomeric ester units comprising sulfonate groups, wherein the ionomeric ester units are present in an amount from 0.1 to 5 mole percent of the total moles of ester units in the ionomeric polyester copolymer; from 0.5 to 6 weight percent of the organoclay; from 1 to 10 weight percent of an epoxy compound; and from 0.2 to 0.5 weight percent of the catalytic metal salt.

In another specific embodiment, the nanocomposite composition comprises, based on the total weight of the composition, from 89 to 98.49 weight percent, specifically 94 to 98 weight percent, of a polyester ionomer component, wherein the polyester ionomer component comprises, based on the polyester ionomer component, 30 to 40 wt.% of a non-ionomeric polyester, and 60 to 70 wt.% of a ionomeric polyester copolymer comprising non-ionomeric and ionomeric ester units comprising sulfonate groups, wherein the ionomeric units ester units are present in an amount from 0.1 to 5 mole percent of the total moles of ester units in the ionomeric polyester copolymer; from 2 to 6 weight percent of the organoclay; from 1 to 6 weight percent of an epoxy compound; and from 0.01 to 0.3 weight percent of the catalytic metal salt.

In another specific embodiment, the nanocomposite composition comprises, based on the total weight of the composition, from 89 to 98.49 weight percent, specifically 94 to 98 weight percent, of the polyester composition comprising, based on the weight of the polyester composition, from 30 to 40 weight percent of a polyalkylene ester, and from 60 to 70 weight percent of an ionomeric poly(butylene terephthalate) ester comprising sulfonate groups, wherein the sulfonate groups are present in an amount from 0.1 to 5 mole percent, based on the total moles of polyester in the polyester composition; from 0.5 to 6 weight percent of the organoclay; from 1 to 4 weight percent of the epoxy compound, wherein the epoxy compound is a cycloaliphatic diepoxide; from 0.01 to 1 weight percent of the catalytic metal salt, wherein the catalytic metal salt is an alkali or alkaline earth metal salt of a C₂₋₃₆ carboxylate, C₂₋₁₈ enolate, or a C₂₋₃₆ dicarboxylate.

In another specific embodiment, the nanocomposite composition comprises, based on the total weight of the composition, from 94 to 98 weight percent of a polyester composition comprising, based on the weight of the polyester composition, from 30 to 40 weight percent of a poly(butylene terephthalate) ester, and from 60 to 70 of a poly(butylene terephthalate) ionomer copolymer comprising non-ionomeric and ionomeric ester units comprising sulfonate groups, wherein the ionomeric units ester units are present in an amount from 0.1 to 5 mole percent of the total moles of ester units in the ionomeric polyester copolymer; from 0.5 to 6 weight percent of the organoclay, wherein the organoclay is modified using an alklyammonium compound; from 1 to 3 weight percent of the epoxy compound, where the epoxy compound is 3,4-epoxycyclohexylmethyl-3,4-epoxycyclohexyl carboxylate; from 0.01 to 1 weight percent of sodium stearate.

The nanocomposite compositions can further comprise one or more additives, in an amount effective to provide the desired property, for example in an amount of more than 0, up to 80 wt%, specifically in an amount from 0.0001 to 60 wt% of the composition, each based on the total weight of the composition comprising the additive. These additives include such materials as, thermal stabilizers, antioxidants, UV stabilizers, plasticizers, visual effect enhancers, extenders, antistatic agents, catalyst quenchers, mold releasing agents, fire retardants, blowing agents, impact modifiers, processing aids, and the like. The different effective amounts of each of the foregoing types of additive that can be incorporated into the composition include those that are commonly used in polymer formulation, and are known to those skilled in the art. In one embodiment the nanocomposite comprises a polymer other than the polyester and the ionomeric polyalkylene ester.

In one embodiment an article molded from the composition has a flexural modulus of greater than 1500 MPa, measured in accordance with ISO 178. More specifically the flexural modulus is greater than 1800 MPa, and even more specifically greater than 2000 MPa, up to 3500 MPa, measured in accordance with ISO 178.

In another embodiment an article molded from the composition has a tensile elongation at break of greater than 5%, measured in accordance with ISO 527. More specifically, the tensile elongation at break is greater than 10%, even more specifically greater than 50%, measured in accordance with ISO 527.

In another embodiment, an article molded from the composition retains at least 30%, more specifically, at least 35%, and more specifically at least 40%, and even more specifically at least 50%, up to 70% of its tensile strength, measured in accordance with ISO 178, after aging at 110°C for 7 days at a relative humidity of 100% and a pressure of 1 atm (0.1 MPa).

Also disclosed is a method of manufacturing the nanocomposite compositions as described herein, comprising melt blending the polyester, the ionomeric polyalkylene ester, the organoclay, the epoxy compound, the catalytic metal salt, and optional additives. In one embodiment the melt blending is carried out in an extruder.

The nanocomposite compositions can be formed into articles by conventional thermoplastic processing techniques. Molded articles can be made by compression molding, blow molding, injection molding, and the like. Articles prepared from the nanocomposite compositions include but are not limited to film, sheet, pipes, tubes, profiles, molded articles, perform, stretch blow molded films and containers, injection blow molded containers, extrusion blow molded films and containers, themoformed articles and the like. Articles prepared from the compositions can be used in applications that require materials with low glass transition temperature and high heat resistance such as automotive applications.

In one embodiment, an article comprises at least one nanocomposite composition as described herein, wherein the article is an automotive part. Automotive parts are exemplified by body panels, quarter panels, rocker panels, trim, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards.

This disclosure is further illustrated by the following non-limiting Examples. The following examples are set forth to provide those of ordinary skill in the art with a detailed description of how the methods claimed herein are evaluated, and are not intended to limit the scope of what the inventors regard as their invention.

### EXAMPLES

Unless indicated otherwise, parts are by weight, temperature is in degrees centigrade (°C).

Materials used in these examples are listed in Table 1.

**Table 1.**

| Designation | Description | Source |
|---|---|---|
| PBT-1 | Poly(1,4-butylene terephthalate) having a viscosity of 1.2 cm³/g as measured in a 60:40 phenol/tetrachloroethane mixture (PBT 315) | Sabic Innovative Plastics |
| PBT-0.2% | Poly(1,4-butylene terephthalate-co-dimethyl-5-sulfo isophthalate sodium salt) containing 0.2% sulfonate groups | Sabic Innovative Plastics |
| PBT-0.5% | Poly(1,4-butylene terephthalate-co-dimethyl-5-sulfoisophthalate sodium salt) containing 0.5% sulfonate groups | Sabic Innovative Plastics |
| ERL4321 | 3,4-epoxycyclohexylmethyl-3,4-epoxy-cyclohexyl carboxylate | DOW Co. |
| 412S | Thioester, pentaerythritol tetrakis(3-(dodecylthio)propionate) sold as SEENOX® 412-S | Crompton |
| NaSt | Sodium stearate, catalyst | - |
| AO1010 | Pentaerythritol tetrakis(3,5-di-tert-butyl-4-hydroxyhydrocinnamate) sold as IRGANOX® 1010 | Ciba Geigy |
| PETS | Pentaerythritol tetrastearate (mold release agent) | - |
| Closite 10A clay | Benzyltallowdimethylammonium salts with bentonite clay | Southern Clay Products Inc |

### General Procedure.

The ingredients of the examples shown below in Table 2 were extruded on a 40 mm Werner Pfleiderer Twin Screw Extruder with a vacuum vented mixing screw, at a barrel and die head temperature between 240°C and 265°C and 150 to 300 rpm screw speed. The extruder has eight independent feeders for different raws and can be operated at a maximum rate of 136 kg/hr (300 lbs/hr). The extrudate was cooled through a water bath prior to pelletizing. Test parts were injection moulded on a van Dorn molding machine with a set temperature of approximately 240°C to 265°C. The pellets were dried for 3-4 hours at 120°C in a forced air-circulating oven prior to injection molding.

### Testing Procedures.

ASTM tested tensile properties on injection-molded parts. Tensile elongation at break was tested on 7 x 1/8 in. (177.8 x 3.3 nm) injection molded bars at room temperature with a crosshead speed of 2 in./min (50.8 mm/min) samples by using ASTM D648. Tensile testing was done at room temperature on as molded or hydroaged samples.

Notched Izod testing as done on 3 x ½ x 1/8 inch (76.2 x 12.7 x 3.2 mm) bars using ASTM method D256.

Flexural properties were measured using ASTM 790 or ISO 178 method. All samples were tested at room temperature.

Heat Deflection Temperature was tested on five bars having the dimensions 5 x 0.5 x 0.125 inches (127 x 12.7 x 3.2 mm) using ASTM method D648.

Coefficient of Thermal Expansion (CTE) was measured according to ASTM E 831 procedure in flow and x-flow direction with a temperature range of -40°C to 40°C using Thermal Mechanical Analyzer 7 from Perkin Elmer instruments.

### Hydrolysis Testing.

Tensile bars were aged in a pressure cooker at 110° C. and 100% relative humidity. Tensile bars were randomly put into a cotton bag and aged. cotton bag methods requires less space in the pressure cooker and does not require to make holes on the tensile bars, all hydroaging tests in the present report were done by cotton-bag method. Samples were taken at intervals of 0, 2, 4, and 7 days after hydroaging and measured.

### Examples C1-C4, E1-E2.

Table 2 summarizes the results of tensile, impact, and thermal properties of PBT nanoclay composites with and without the hydropackage (ERL 4221 and Sodium Stearate). Comparing C3, C4 with C2 it is evident that use of ionomeric polymer leads to exfoliation of nanoclays leading to higher elongation to break (TE, break) and flexural modulus (FM) at the same time. Further, comparing E1 and E2 with comparative examples (C2, C3 and C4) it is clear that use of hydrostable package results in no significant drop in tensile properties (TS or TE) and only a mild drop in Izod unnotched impact (IUI) and heat properties. The PBT ionomer nanocomposites with the hydropackage also have a significant improvement in flexural modulus (FM) compared to PBT alone, Cl.

**Table 2.**

| COMPONENT | Unit | C1 | C2 | C3 | C4 | E1 | E2 |
|---|---|---|---|---|---|---|---|
| PBT | | 99.7 | 97.7 | | | | |
| PBT-0.2% Ionomer | % | | | 96.7 | | 95.15 | |
| PBT-0.59c Ionomer | % | | | | 96.7 | | 95.15 |
| Clay (Closite 10A) | % | | 2 | 3 | 3 | 3 | 3 |
| ERL 4221 | % | | | | | 1.5 | 1.5 |
| NaSt | % | | | | | 0.05 | 0.05 |
| AO1010 | % | 0.1 | 0.1 | 0.1 | 0.1 | 0.1 | 0.1 |
| PETS | % | 0.2 | 0.2 | 0.2 | 0.2 | 0.2 | 0.3 |
| MECHANICAL | | | | | | | |
| TS, Yield 50 num/min | MPa | 51 | 59 | 61 | 60 | 62 | 61 |
| TE, break 50 mm/min | % | 300 | 3 | 14 | 16 | 17 | 16 |
| FM 1.3 mm/min | MPa | 2340 | 2800 | 2880 | 2830 | 2880 | 2850 |

| FS 1.0 mm/min | MPa | 82 | 91 | 91 | 90 | 91 | 89 |
|---|---|---|---|---|---|---|---|
| IMPACT | | | | | | | |
| IUI, 23 °C | J/m | 1600 | 1630 | 1660 | 1610 | 1150 | 1350 |
| INI, 23 °C | J/m | 53 | 45 | 39 | 35 | 33 | 37 |
| THERMAL | | | | | | | |
| HDT, 0.45 MPa, Flat | °C | 154 | 139 | 142 | 140 | 136 | 138 |
| HDT, 1.82 MPa, Flat | °C | 54 | 51 | 52 | 51 | 53 | 50 |
| TMA (inflow) | °C | 7.9E-05 | 7.2E-05 | 7.3-05 | 7.5-05 | 7.1-05 | 7.3-05 |
| TMA (cross flow) | °C | 8.1E-05 - | 8.1E-05 | 8.6E-05 | 8.6E-05 | 8.5E-05 | 8.5E-05 |
| BARRIER | | | | | | | |
| Oxygen | cc nun/M² day | 1.15 | 1.06 | - | 0.56 | - | - |
| Water | cc mm/M² day | 0.62 | 0.98 | - | 0.80 | - | - |
| PHYSICAL | | | | | | | |
| Specific Gravity | | 1.29 | 1.31 | 1.31 | 1.31 | 1.31 | 1.31 |

The above samples were tested for hydrostability in a pressure cooker at 110°C/100% humidity. These conditions are one of the severe hydrotesting conditions. The tensile results of hydroaged samples are given in Table 3. As seen in Table 3, standard PBT, C1, was completely destroyed after 7 days testing. It is well established that PBT ionomers have lower hydrostability than standard PBT due to the ionic monomer. For this reason, a common method of forming biodegradable polyesters, including PBT, is to add ionomeric groups to the backbone. However, it is evident from Table 3 that hydrostabilized nanocomposites (E1, E2) have better tensile properties than unstabilized nanocomposites (C2, C3) and control PBT (C1). Thus, PBT nanocomposites with improved hydrostability were obtained using ionomeric polyester copolymer of low ionic content in combination with an epoxy additive.

The results show that the a nanocomposite comprising an ionomeric polyester copolymer and a nanoclay leads to the best combination of modulus, ductility and O₂ barrier properties without significantly increasing the specific gravity, and is further advantaged by the addition of epoxy additives that improve on the hydrostability of the nanocomposite.

**Table 3.**

| COMPONENT | Unit | C1 | C2 | C3 | C5 | E1 | E2 |
|---|---|---|---|---|---|---|---|
| PBT | % | 99.7 | | | | | |
| PBT-0.2% Ionomer | 90 | | 96.7 | | | 95.15 | |
| PBT-0.5% Ionomer | % | | | 96.7 | 95.15 | | 95.15 |
| Clay (Closite 10A) | % | | 3 | 3 | | 3 | 3 |
| ERL4221 | % | | | | 1.5 | 1.5 | 1.5 |
| NaSt | % | | | | 0.05 | 0.05 | 0.05 |
| AO1010 | % | 0.1 | 0.1 | 0.1 | 0.1 | 0.1 | 0.1 |
| PETS | % | 0.2 | 0.2 | 0.2 | 0.2 | 0.2 | 0.2 |
| Hydro Aging | | | | | | | |
| Mechanicals | | | | | | | |
| TS, Yield 50 mm/min | MPa | 56 | 61 | 60 | 56 | 63 | 61 |
| 0 days | | | | | | | |
| TS, Yield 50 mm/min | % | 55 | 52 | 53 | 55 | 50 | 50 |
| 2 days | | | | | | | |
| TS, Yield 50 mm/min | MPa | 36 | 43 | 44 | 54 | 50 | 52 |
| 4 days | | | | | | | |
| TS, Yield 50 mm/min | MPa | Sample | Sample | Sample | 50 | 23 | 34 |
| 7 days | | Broken | Broken | Broken | | | |
| %TS Retention after 7 | MPa | Sample | Sample | Sample | 90 | 38 | 56 |
| days | | Broken | Broken | Broken | | | |

## Claims

1. A composition comprising, based on the total weight of the composition,
from 79 to 99.79 weight percent of a polyester ionomer component, wherein the polyester ionomer component comprises, based on the total weight of the polyester ionomer component,
0 to 40 wt.% of a non-ionomeric polyester, and
60 to 100 wt.% of an ionomeric polyester copolymer comprising (i) non-ionomeric ester units and (ii) sulfonated ionomeric ester units, wherein the sulfonated ionomeric ester units are present in an amount from 0.05 to 5 mole percent of the total moles of ester units in the ionomeric polyester copolymer;
from 0.1 to less than 7 weight percent of an organoclay;
from 0.1 to 10 weight percent of an epoxy compound; and
from 0.01 to 5 weight percent of a catalytic metal salt.

2. The composition of Claim 1, wherein an article molded from the composition has a flexural modulus of greater than 1500 MPa, measured in accordance with ISO 178; wherein an article molded from the composition has a tensile elongation at break of greater than 5%, measured in accordance with ISO 527; and/or wherein an article molded from the composition retains at least 30% of its tensile strength, measured in accordance with ASTM D638, after aging at 110°C for 7 days at a relative humidity of 100%.

3. The composition of any of Claims 1-2, wherein the polyester is a polyalkylene ester.

4. The composition of Claim 3, wherein the polyalkylene ester is a poly(butylene) terephthalate, and/or wherein the ionomeric polyalkylene ester is a poly(butylene) terephthalate.

5. The composition of any of Claims 1-4, wherein the ionomeric polyalkylene ester is a telechelic poly(butylene terephthalate) derived from a recycled poly(ethylene terephthalate).

6. The composition of any of Claims 1-5, wherein the sulfonate end groups are derived from reaction of a sulfoaromatic_carboxylic acid of the formula (HO₂C-Ar-SO₃)ₙMⁿ⁺, wherein Ar is a C₃-C₁₂ aromatic group that is unsubstituted or substituted with a C₁-C₃ aliphatic group; M is an alkali metal, alkaline earth metal, or transition metal; and n is 1 or 2; or from reaction of a compound of the formula (HO-R⁵-O-R⁶-SO₃⁻)ₙMⁿ⁺, wherein R⁵ and R⁶ are independently at each occurrence a C₁-C₁₂ aliphatic group, a C₃-C₁₂ cycloaliphatic group, or a C₃-C₁₂ aromatic group; M is an alkali metal, alkaline earth metal, or transition metal; and n is 1 or 2.

7. The composition of any of Claims 1-6, wherein the organoclay comprises an inorganic clay selected from the group consisting of montmorillonite, saponite, hectorite, vermiculite, bentonite, nontronite, beidellite, volkonskoite, saponite, magadite, kenyaite, synthetic saponite, synthetic hectorite, fluorinated montmorillonite, and combinations thereof, and wherein the organoclay is treated with an organic modifier selected from the group consisting of poly alkylammonium salts, polyalkylaminopyridinium salts, polyalkylguanidinium salts, polyalkylimidazolium salts, polyalkylbenzimidazolium salts, phosphonium salts, sulfonium salts, and a combination comprising at least one of the foregoing salts.

8. The composition of any of Claims 1-7, wherein the amount of the epoxy compound is 10 to 320 milliequivalents epoxy group per 1.0 kg of the polyester composition, and wherein the epoxy compound has at least two terminal epoxy groups.

9. The composition of any of Claims 1-8, wherein the epoxy compound is a dicycloaliphatic diepoxy compound or an epoxy-functional polymer; and wherein the catalytic metal salt is a metal salt of a C₂₋₃₆ carboxylate, C₂₋₁₈ enolate, or a C₂₋₃₆ dicarboxylate.

10. The composition of any of any of Claims 1-9, further comprising a polymer other than the non-ionomeric polyester and the ionomeric polyester copolymer.

11. The composition of any of Claims 1-10 comprising, based on the total weight of the composition,
from 83.5 to 98.3 weight percent of the polyester ionomer component, wherein the polyester ionomer component comprises, based on the total weight of the polyester ionomer component,
30 to 40 wt.% of the non-ionomeric polyester, and
60 to 70 wt.% of the ionomeric polyester copolymer comprising (i) non-ionomeric ester units and (ii) sulfonated ionomeric ester units, wherein the sulfonated ionomeric ester units are present in an amount from 0.1 to 5 mole percent of the total moles of ester units in the ionomeric polyester copolymer;
from 0.5 to 6 weight percent of the organoclay;
from 1 to 10 weight percent of the epoxy compound; and
from 0.2 to 0.5 weight percent of the catalytic metal salt.

12. The composition of any of Claims 1-11 comprising, based on the total weight of the composition,
from 89 to 98.49 weight percent of the polyester ionomer component, wherein the polyester ionomer component comprises, based on the total weight of the polyester ionomer component,
30 to 40 wt.% of a non-ionomeric polyalkylene ester, and
60 to 70 wt.% of the poly(butylene terephthalate) ionomer copolymer comprising (i) non-ionomeric ester units and (ii) sulfonated ionomeric ester units, wherein the sulfonated ionomeric ester units are present in an amount from 0.1 to 5 mole percent of the total moles of ester units in the ionomeric polyester copolymer;
from 0.5 to 6 weight percent of the organoclay;
from 1 to 4 weight percent of the epoxy compound, wherein the epoxy compound is a cycloaliphatic diepoxide;
from 0.01 to 1 weight percent of the catalytic metal salt, wherein the catalytic metal salt is an alkali or alkaline earth metal salt of a C₂₋₃₆ carboxylate, C₂₋₁₈ enolate, or a C₂₋₃₆ dicarboxylate.

13. The composition of any of Claims 1-12 comprising, based on the total weight of the composition,
from 89 to 98.49 weight percent of the polyester ionomer component, wherein the polyester ionomer component comprises, based on the total weight of the polyester ionomer component,
30 to 40 wt.% of the non-ionomeric polyalkylene ester, and
60 to 70 wt.% of a poly(butylene terephthalate) ionomer copolymer comprising (i) non-ionomeric ester units and (ii) sulfonated ionomeric ester units, wherein the sulfonated ionomeric ester units are present in an amount from 0.1 to 5 mole percent of the total moles of ester units in the ionomeric polyester copolymer;
from 0.5 to 6 weight percent of the organoclay, wherein the organoclay is modified using an alklyammonium compound;
from 1 to 3 weight percent of the epoxy compound, where the epoxy compound is 3,4-epoxycyclohexylmethyl-3,4-epoxycyclohexyl carboxylate;
from 0.01 to 1 weight percent of sodium stearate.

14. A method of manufacture of the composition of any of Claims 1-13, comprising melt blending the components of the corresponding Claims 1-21.

15. An article comprising the composition of any of Claims 1-14 in the form of an automotive part selected from the group consisting of body panels, quarter panels, rocker panels, trim, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards.

## Patentansprüche

1. Eine Zusammensetzung enthaltend von 79 bis 99,79 Gew.% bezogen auf das Gesamtgewicht der Zusammensetzung einer Polyesterionomer-Komponente, worin die Polyesterionomer-Komponente bezogen auf das Gesamtgewicht der Polyesterionomer-Komponente enthält,
0 bis 40 Gew.% eines nicht-ionomeren Polyesters, und
60 bis 100 Gew.% eines ionomeren Polyestercopolymers enthaltend (i) nicht ionomere Estereinheiten und (ii) sulfonierte ionomere Estereinheiten, worin die sulfonierten ionomeren Estereinheiten in einer Menge von 0,05 bis 5 Mol % der gesamten Mole der Estereinheiten in dem ionomeren Polyestercopolymer vorliegen;
von 0,1 bis weniger als 7 Gew.% eines Organotons;
von 0,1 bis 10 Gew.% einer Epoxyverbindung;
und von 0,01 bis 5 Gew.% eines katalytischen Metallsalzes.

2. Die Zusammensetzung nach Anspruch 1, worin ein Gegenstand, der aus der Zusammensetzung geformt ist, ein Biegemodul von mehr als 1500 MPa, gemessen im Einklang mit ISO 178 aufweist; worin ein Gegenstand, der aus der Zusammensetzung geformt ist, eine Reißdehnung von mehr als 5 % gemessen im Einklang mit ISO 527 aufweist; und/oder wobei ein Gegenstand, der aus der Zusammensetzung geformt ist, mindestens 30 % seiner Zugfestigkeit gemessen im Einklang mit ASTMD638 behält, nachdem er bei 110°C, 7 Tage lang bei einer relativen Luftfeuchtigkeit von 100 % gealtert wurde.

3. Die Zusammensetzung nach einem der Ansprüche 1 bis 2, worin der Polyester ein Polyalkylenester ist.

4. Die Zusammensetzung nach Anspruch 3, worin der Polyalkylenester ein Poly(butylen)terephthalat, und/oder worin der ionomere Polyalkylenester ein Poly(butylen)terephthalat ist.

5. Die Zusammensetzung nach einem der.Ansprüche 1 bis 4, worin der ionomere Polyalkylenester ein telecheles Poly(butylen terephthalat) ist, das von einem recycelten Poly(ethylen terephthalat) abstammt.

6. Die Zusammensetzung nach einem der Ansprüche 1 bis 5, worin die Sulfonat-Endgruppen aus der Reaktion einer sulfoaromatischen Carbonsäure der Formel (HO₂C-Ar-SO₃⁻)ₙMⁿ⁺ stammt, worin Ar eine C₃ bis C₁₂ aromatische Gruppe ist, die unsubstituiert oder substituiert mit einer C₁ bis C₃ aliphatischen Gruppe ist; M ein Alkalimetall, Erdalkalimetall oder Übergangsmetall; und n 1 oder 2 ist; oder von der Reaktion einer Verbindung der Formel (HO-R⁵-O-R⁶-SO₃⁻)ₙMⁿ⁺, worin R⁵ und R⁶ unabhängig voneinander jeweils eine C₁ bis C₁₂ aliphatische Gruppe, eine C₃ bis C₁₂ cycloaliphatische Gruppe, oder eine C₃ bis C₁₂ aromatische Gruppe sind; M ein Alkalimetall, Erdalkalimetall oder Übergangsmetall ist; und n 1 oder 2 ist.

7. Die Zusammensetzung nach einem der Ansprüche 1 bis 6, worin der organische Ton umfasst, einen anorganischen Ton ausgewählt aus der Gruppe bestehend aus Montmorillonit, Saponit, Hectorit, Vermiculit, Bentonit, Nontronit, Beidellit, Volkonskoit, Saponit, Magadit, Kenyait, synthetischer Saponit, synthetischer Hectorit, fluorierter Montmorillonit, und Kombinationen hiervon, und worin der organische Ton mit einem organischen Modifizierer behandelt ist, ausgewählt aus der Gruppe bestehend aus folyalkylammoniumsalzen, Polyalkylaminopyridiniumsalzen, Polyalkylguanidiniumsalzen, Polyalkylimidazoliumsalzen, Polyalkylbenzimidazoliumsalzen, Phosphoniumsalzen, Sulfoniumsalzen und einer Kombination umfassend mindestens eines der vorgenannten Salze.

8. Die Zusammensetzung nach einem der Ansprüche 1 bis 7, worin die Menge der Epoxyverbindung 10 bis 320 Milliäquivalente Epoxygruppe pro 1 kg der Polyesterzusammensetzung ist, und worin die Epoxyverbindung mindestens 2 terminale Epoxygruppen aufweist.

9. Die Zusammensetzung nach einem der Ansprüche 1 bis 8, worin die Epoxyverbindung eine dicycloaliphatische Diepoxyverbindung oder ein epoxyfunktionales Polymer ist, und worin das katalytische Metallsalz ein Metallsalz eines C₂ bis 36 Carboxylats, C_{2 bis 18} Enolats, oder eines C_{2 bis 36} Dicarboxylats ist.

10. Die Zusammensetzung nach einem der Ansprüche 1 bis 9, darüber hinaus enthaltend ein Polymer, das nicht der nicht-ionomere Polyester und das ionomere Polyestercopolymer ist.

11. Die Zusammensetzung nach einem der Ansprüche 1 bis 10 umfassend, bezogen auf das Gesamtgewicht der Zusammensetzung,
von 83,5 bis 98,3 Gew.% der Polyesterionomer-Komponente, worin die Polyesterionomer-Komponente umfasst, bezogen auf das Gesamtgewicht der Polyesterionomer-Komponente,
30 bis 40 Gew.% des nicht-ionomeren Polyesters, und 60 bis 70 Gew.% des ionomeren Polyestercopolymers umfassend (i) nicht-ionomere Estereinheiten und
(ii) sulfonierte ionomere Estereinheiten, worin die sulfonierten ionomeren Estereinheiten vorliegen in einer Menge von 0,1 bis 5 Mol % der Gesamtmole der Estereinheiten in dem ionomeren Polyestercopolymer;
von 0,5 bis 6 Gew.% des Organotons;
von 1 bis 10 Gew.% der Epoxyverbindung; und
von 0,2 bis 0.5 Gew.% des katalytischen Metallsalzes.

12. Die Zusammensetzung nach einem der Ansprüche 1 bis 11 umfassend, bezogen auf das Gesamtgewicht der Zusammensetzung,
von 89 bis 98,49 Gew.% der Polyesterionomer-Komponente, worin die Polyesterionomer-Komponente enthält, bezogen auf das Gesamtgewicht der Polyesterionomer-Komponente,
30 bis 40 Gew.% eines nicht-ionomeren Polyalkylenesters, und
60 bis 70 Gew.% eines Poly(butylen terephthalat)ionomercopolymers umfassend (i) nicht-ionomere Estereinheiten und (ii) sulfonierte ionomere Estereinheiten, worin die sulfonierten ionomeren Estereinheiten in einer Menge von 0,1 bis 5 Mol % der Gesamtmole der Estereinheiten in dem ionomeren Polyestercopolymer vorliegen;
von 0,5 bis 6 Gew.% des Organotons;
von 1 bis 4 Gew.% der Epoxyverbindung, wobei die Epoxyverbindung ein cycloaliphatisches Diepoxid ist; von 0,01 bis 1 Gew.% des katalytischen Metallsalzes, wobei das katalytische Metallsalz ein Alkali oder Erdalkalimetallsalz eines C₂ bis ₃₆ Carboxylat, C_{2 bis 18} Enolats, oder eines C_{2 bis 26} Dicarboxylats ist.

13. Die Zusammensetzung nach einem der Ansprüche 1 bis 12 umfassend, bezogen auf die Gesamtmenge der Zusammensetzung, von 89 bis 98,49 Gew.% der Polyesterionomer-Komponente, worin die Polyesterionomer-Komponente enthält, bezogen auf das Gesamtgewicht der Polyesterionomer-Komponente,
30 bis 40 Gew.% eines nicht-ionomeren Polyalkylenesters, und
60 bis 70 Gew.% eines Poly(butylen terephthalat)ionomercopolymers umfassend (i) nicht-ionomere Estereinheiten und (ii) sulfonierte ionomere Estereinheiten, worin die sulfonierten ionomeren Estereinheiten in einer Menge von 0,1 bis 5 Mol % der Gesamtmole der Estereinheiten in dem ionomeren Polyestercopolymer vorliegen;
von 0,5 bis 6 Gew.% des Organotons, wobei der Organoton modifiziert ist unter Verwendung einer Alkylammoniumverbindung; von 1 bis 3 Gew.% der Epoxyverbindung, wobei die Epoxyverbindung 3,4-Epoxycyclohexylmethyl-3,4-Epoxycyclohexyl Carboxylat ist; von 0,01 bis 1 Gew.% Natriumstearat.

14. Ein Verfahren zum Herstellen der Zusammensetzung nach einem der Ansprüche 1 bis 13 umfassend das Schmelzblenden der Komponenten der entsprechenden Ansprüche 1 bis 21.

15. Ein Gegenstand umfassend die Zusammensetzung nach einem der Ansprüche 1 bis 14 in Form eines Automobilteils ausgewählt aus der Gruppe, bestehend aus Karosserieteilen, Autoseiten(wänden), Rocker Panels, Innenausstattung, Kotflügeln, Türen, Heckklappen, Kofferraumdeckeln, Motorhauben, Kühlerhauben, Autodächern, Stoßfänger, Instrumentenbrettern, Grill, Spiegelgehäusen, Säulenapplikationen, Verkleidungen, Seitenwandverkleidungen, Radabdeckungen, Radkappen, Türgriffen, Spoilern, Fensterrahmen, Scheinwerferblenden, Scheinwerfern, Rücklichtern, Rücklichtgehäusen, Rücklichtblenden, Autokennzeichen-Gehäusen, Dachgepäckträgern, und Trittbrettern.

## Revendications

1. Composition comprenant, par rapport au poids total de la composition, de 79 à 99,79 pour cent en poids d'un composant polyester ionomère, le composant polyester ionomères comprenant, par rapport au poids total du composant polyester ionomère,
0 à 40 % en poids d'un poly(ester) non ionomère, et
60 à 100 % en poids d'un copolymère de polyester ionomère comprenant (i) des motifs ester non-ionomères et (ii) des motifs ester ionomère sulfonatés, les motifs ester ionomère sulfonatés étant présents en une quantité de 0,05 à 5 pour cent en moles rapporté au nombre total de moles de motifs ester dans le copolymère de polyester ionomère,
de 0,1 à moins de 7 pour cent en poids d'une organoargile ;
de 0,1 à 10 pour cent en poids d'un composé epoxy, et
de 0,01 à 5 pour cent en poids d'un sel de métal catalytique.

2. Composition selon la revendication 1, dans laquelle un article moulé à partir de la composition a un module en flexion supérieur à 1 500 MPa, mesuré en conformité avec la norme ISO 178 ; dans laquelle un article moulé à partir de la composition a un allongement à la rupture en traction de plus de 5 %, mesuré en conformité avec la norme ISO 527 ; et/ou dans laquelle un article moulé à partir de la composition conserve au moins 30 % de sa résistance à la traction, mesurée en conformité avec la norme ASTMD638, après vieillissement à 110 °C pendant 7 jours à une humidité relative de 100 %.

3. Composition selon l'une quelconque des revendications 1 à 2, dans laquelle le polyester est un poly(ester d'alkylène).

4. Composition selon la revendication 3, dans laquelle le poly(ester d'alkylène) est un poly(téréphtalate de butylène), et/ou dans laquelle le poly(ester d'alkylène) ionomère est un poly(téréphtalate de butylène).

5. Composition selon l'une quelconque des revendications 1 à 4, dans laquelle le poly(ester d'alkylène) ionomère est un poly(téréphtalate de butylène) téléchélique dérivé d'un poly(téréphtalate d'éthylène) recyclé.

6. Composition selon l'une quelconque des revendications 1 à 5, dans laquelle les groupes terminaux sulfonate sont dérivés de la réaction d'un acide carboxylique sulfoaromatique de formule (HO₂C-Ar-SO₃-)ₙMⁿ⁺,
où Ar est un groupe aromatique en C₃ à C₁₂ qui est non substitué ou substitué par un groupe aliphatique en C₁ à C₃ ; M est un métal alcalin, un métal alcalino-terreux ou un métal de transition ; et n vaut 1 ou 2 ; ou de la réaction d'un composé de formule (HOC-R⁵-O-R⁶-SO₃⁻)ₙMⁿ⁺, où R⁵ et R⁶ sont indépendamment à chaque occurrence un groupe aliphatique en C₁ à C₁₂, un groupe cycloaliphatique en C₃ à C₁₂ ou un groupe aromatique en C₃ à C₁₂ ; M est un métal alcalin, un métal alcalino-terreux ou un métal de transition ; et n vaut 1 ou 2.

7. Composition selon l'une quelconque des revendications 1 à 6, dans laquelle l'organoargile comprend une argile minérale choisie dans le groupe constitué de la montmorillonite, la saponite, l'hectorite, la vermiculite, la bentonite, la nontronite, la beidellite, la volkoskoïte, la saponite, la magadite, la kényaïte, la saponite synthétique, l'hectorite synthétique, la montmorillonite fluorée, et leurs combinaisons, et dans laquelle l'organoargile est traitée avec un modificateur organique choisi dans le groupe constitué des sels de polyalkylammonium, sels de polyalkylaminopyridinium, sels de polyalkylguanidinium, sels de polyalkylimidazolium, sels de polyalkylbenzimidazolium, sels de phosphonium, sels de sulfonium, et une combinaison comprenant au moins l'un des sels précédents.

8. Composition selon l'une quelconque des revendications 1 à 7, dans laquelle la quantité du composé époxy est de 10 à 320 milliéquivalents de groupe époxy pour 1,0 kg de la composition de polyester, et dans laquelle le composé époxy comporte au moins deux groupes époxy terminaux.

9. Composition selon l'une quelconque des revendications 1 à 8, dans laquelle le composé époxy est un composé diépoxy dicycloaliphatique ou un polymère à fonctions époxy ; et dans laquelle le sel de métal catalytique est un sel de métal d'un carboxylate en C_{2 à 36}, énolate en C_{2 à 18}, ou dicarboxylate en C_{2 à 36}.

10. Composition selon l'une quelconque des revendications 1 à 9, comprenant en outre un polymère autre que le polyester non ionomères et le copolymère de polyester ionomère.

11. Composition selon l'une quelconque des revendications 1 à 10, comprenant, par rapport au poids total de la composition,
de 83,5 à 98,3 pour cent en poids d'un composant polyester ionomère, dans laquelle le composant polyester ionomère comprend, par rapport au poids total du composant polyester ionomère,
30 à 40 % en poids d'un polyester non ionomère, et
60 à 70 % en poids d'un copolymère de polyester ionomère comprenant (i) des motifs ester non-ionomères et (ii) des motifs ester ionomères sulfonatés, les motifs ester ionomère sulfonaté étant présents en une quantité de 0,1 à 5 pour cent en moles, rapporté au nombre total de moles de motifs ester dans le copolymère de polyester ionomère ;
de 0,5 à 6 pour cent en poids de l'organoargile ;
de 1 à 10 pour cent en poids du composé époxy ; et
de 0,2 à 0,5 pour cent en poids du sel de métal catalytique.

12. Composition selon l'une quelconque des revendications 1 à 11, comprenant, par rapport au poids total de la composition,
de 89 à 98,49 pour cent en poids d'un composant polyester ionomère, dans laquelle le composant polyester ionomères comprend, par rapport au poids total du composant polyester ionomère,
30 à 40 % en poids d'un poly(ester d'alkylène) non ionomère, et
60 à 70 % en poids d'un copolymère ionomère poly(téréphtalate de butylène) comprenant (i) des motifs ester non-ionomères et (ii) des motifs ester ionomère sulfonatés, les motifs ester ionomères sulfonatés étant présents en une quantité de 0,1 à 5 pour cent en moles rapporté au nombre total de moles de motifs ester dans le copolymère de polyester ionomère
de 0,5 à 6 pour cent en poids de l'organoargile ;
de 1 à 4 pour cent en poids de composé époxy, où le composé époxy est un diépoxyde cycloaliphatique ;
de 0,01 à 1 pour cent en poids du sel de métal catalytique, où le sel de métal catalytique est un sel de métal alcalin ou alcalino-terreux d'un carboxylate en C_{2 à 36}, énolate en C_{2 à 18}, ou dicarboxylate en C_{2 à 36}.

13. Composition selon l'une quelconque des revendications 1 à 12, comprenant, par rapport au poids total de la composition,
de 89 à 98,49 pour cent en poids d'un composant polyester ionomères, dans laquelle le composant polyester ionomère comprend, par rapport au poids total du composant polyester ionomère,
30 à 40 % en poids d'un poly(ester d'alkylène) non ionomère, et
60 à 70 % en poids d'un copolymère ionomère poly(téréphtalate de butylène) comprenant (i) des motifs ester non-ionomères et (ii) des motifs ester ionomères sulfonatés, les motifs ester ionomères sulfonatés étant présents en une quantité de 0,1 à 5 pour cent en moles rapporté au nombre total de moles de motifs ester dans le copolymère de polyester ionomère ;
de 0,5 à 6 pour cent en poids de l'organoargile, l'organoargile étant modifiée à l'aide d'un composé alkylammonium ;
de 1 à 3 pour cent en poids du composé époxy, le composé époxy étant le de 3,4-époxycyclohexylcarboxylate de 3,4-époxycyclohexylméthyle ;
de 0,01 à 1 pour cent en poids de stéarate de sodium.

14. Procédé de fabrication de la composition selon l'une quelconque des revendications 1 à 13, comprenant le mélange en fusion des composants des revendications 1 à 21 correspondantes.

15. Article comprenant la composition selon l'une quelconque des revendications 1 à 14 sous la forme d'une pièce automobile choisie dans le groupe constitué par les tôles de carrosserie, les ailes, les bas de caisse, la sellerie, les garde-boue, les portes, les couvercles de coffre, les portes de coffre, les capotes, les capots, les toits, les pare-chocs, les planches de bord, les calandres, les logements de rétroviseur, les décorations de montant milieu, les revêtements, les baguettes de protection latérale, les couvre-roues, les enjoliveurs de roue, les poignées de porte, les becquets, les cadres de fenêtre, les enjoliveurs de phare, les phares, les feux arrière, les logements de feu arrière, les enjoliveurs de feu arrière, les porte-plaques d'immatriculation, les porte-bagages de toit et les barres de frottement.
